(19) Europäisches Patentamt
European Patent Office
Office européen des brevets

(11) **EP 2 501 095 B1**

(12) **EUROPEAN PATENT SPECIFICATION**

(45) Date of publication and mention
of the grant of the patent:
**25.10.2017 Bulletin 2017/43**

(51) Int Cl.:
***H04L 27/36*** *(2006.01)*

(21) Application number: **11158569.1**

(22) Date of filing: **16.03.2011**

(54) **Quadrature communications device with power combiner and related methods**

Quadraturkommunikationsvorrichtung mit Leistungskombinierer und zugehörige Verfahren

Dispositif de communication de quadrature doté d'une alimentation combinée et procédés apparentés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.09.2012 Bulletin 2012/38**

(73) Proprietor: **BlackBerry Limited
Waterloo, ON N2K 0A7 (CA)**

(72) Inventor: **Muhammad, Khurram
Irving, TX 75039 (US)**

(74) Representative: **Roberts, Gwilym Vaughan et al
Kilburn & Strode LLP
Lacon London
84 Theobalds Road
London WC1X 8NL (GB)**

(56) References cited:
**EP-A1- 2 222 044          US-A1- 2005 226 340
US-A1- 2010 016 032**

## Description

## Technical Field

This application relates to the field of communications, and more particularly, to wireless communications systems and related methods.

## Background

Cellular communication systems continue to grow in popularity and have become an integral part of both personal and business communications. Cellular telephones allow users to place and receive phone calls most anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multi-function devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. Constant envelope signals use phase modulation to represent/encode information; however, their amplitude does not change with time. In contrast, non-constant envelope modulation schemes encode information in amplitude and phase and are typically generated using quadrature transmit paths (I/Q paths). There are several amplitude modulation schemes, such as 8 phase-shift keying (8PSK) used in second generation cellular transceivers, quadrature phase-shift keying (QPSK) used in third generation cellular transceivers, and orthogonal frequency-division multiplexing (OFDM) used in fourth generation cellular transceivers, all typically generated using a quadrature transmitter. In contrast to constant envelope modulation, quadrature modulation and demodulation circuits may create linearity issues with power amplifiers because the peak power transmitted is higher than average power, and therefore the PA is mostly operated in the "backed-off" condition, where it is inefficient. This drawback may be further exacerbated under the condition of poor antenna match. This can cause some degradation of total radiated power (TRP) and raise harmonic interference issues because of the greater non-linearity of a power amplifier.

In particular, cellular devices that use Quadrature modulations circuits may experience difficulty in transmitting large bandwidth signals, for example, third and fourth generation cellular transceiver signals. In particular, the large bandwidth of these signals may demand a fairly linear amplifier, which may prove to be quite power inefficient, thereby hurting battery life.

US 2005/226340 A1 discloses an IQ modulation apparatus that comprises disjoint I and Q amplifying sections.

## Brief Description of the Drawings

FIG. 1 is a schematic block diagram of an example embodiment of a communications device.
FIG. 2 is a detailed schematic block diagram of the communications device of FIG. 1.
FIG. 3 is a detailed schematic block diagram of another embodiment of the communications device of FIG. 1.
FIG. 4 is a schematic block diagram of an example embodiment of a communications device.
FIG. 5 is a detailed schematic block diagram of the communications device of FIG. 4.
FIG. 6 is a detailed schematic block diagram of another embodiment of the communications device of FIG. 4.
FIG. 7 is a schematic block diagram of an example embodiment of a communications device.
FIG. 8 is a detailed schematic block diagram of the communications device of FIG. 7.
FIG. 9 is a detailed schematic block diagram of another embodiment of the communications device of FIG. 7.
FIG. 10-13 are diagrams illustrating a simulation of the communications device of FIG. 1.
FIG. 14 is a schematic block diagram illustrating example components of a mobile wireless communications device that may be used with the communications devices of FIGS. 1-9.
FIG. 15 is a schematic block diagram of another embodiment of the communications device of FIG. 3.

## Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

One aspect of the present disclosure is directed to a communications device. The communications device may comprise an In-phase (I) power amplifier configured to generate an I amplified signal, a Quadrature (Q) power amplifier configured to generate a Q amplified signal, an I digital-to-analog converter (DAC) configured to generate an I signal, and a Q DAC configured to generate a Q signal. The communications device may also comprise an I power supply circuit coupled to the I power amplifier and to the I DAC and configured to cause the I power amplifier to modulate an I carrier signal into the I amplified signal based upon the I signal, a Q power supply circuit coupled to the Q power amplifier and to the Q DAC and configured to cause the Q power amplifier to modulate a Q carrier signal into the Q amplified signal based upon the Q signal, and at least one antenna coupled to the I and Q power amplifiers.

For example, in some embodiments, the communications device may include a power combiner coupled between the I and Q power amplifiers and the antenna. In other embodiments, the communications device may include an I antenna and a Q antenna respectively coupled to the I and Q power amplifiers. More specifically, the I and Q antennas may be physically separated. Advantageously, the I and Q power amplifiers may be configured to operate in a saturated mode of operation.

In some embodiments, the communications device may further comprise an I look-up table (LUT) module upstream of the I DAC and configured to supply a linear I signal thereto, and a Q LUT module upstream of the Q DAC configured to supply a linear Q signal. Additionally, the communications device may further comprise a phase locked loop (PLL) configured to generate the I and Q carrier signals. The PLL may be configured to generate the I and Q carrier signals comprising constant envelop I and Q carrier signals, for example.

Moreover, in some embodiments, the communications device may further include an I pre-amplifier coupled between the PLL and the I power amplifier, and a Q pre-amplifier coupled between the PLL and the Q power amplifier. The communications device may further comprise at lest one of a 90/270-degree phase shifter and a 0/180-degree phase shifter between the PLL and the Q pre-amplifier. Also, the I and Q power supply circuits may each comprise a respective switched mode power supply circuit.

For example, the I and Q antennas may comprise rectangular-shaped strip antennas, and the I and Q rectangular-shaped strip antennas may be adjacent to each other. The I and Q DACs may be operable using at least fourth generation cellular wireless signals.

Another aspect is directed to a method of operating a communications device. The method may include using an I power amplifier to generate an I amplified signal, using a Q power amplifier to generate a Q amplified signal, using an I DAC to generate an I signal, and using a Q DAC to generate a Q signal. The method also may include using an I power supply circuit to cause the I power amplifier to modulate an I carrier signal into the I amplified signal based upon the I signal, using a Q power supply circuit to cause the Q power amplifier to modulate a Q carrier signal into the Q amplified signal based upon the Q signal, and using a least one antenna to transmit the I and Q amplified signals.

Yet another aspect of the present disclosure is directed to another communications device. This communications device may include a plurality of I power amplifiers configured to respectively generate a plurality of I amplified signals, a plurality of Q power amplifiers configured to respectively generate a plurality of Q amplified signals, a plurality of I antennas respectively coupled to the plurality of I power amplifiers, and a plurality of Q antennas respectively coupled to the plurality of Q power amplifiers. This communications device may also include an I controller coupled to the plurality of I power amplifiers and configured to selectively enable at least one of the plurality of I power amplifiers, and a Q controller coupled to the plurality of Q power amplifiers and configured to selectively enable at least one of the plurality of Q power amplifiers.

In some embodiments, the communications device may further comprise an I DAC configured to generate an I bias current signal for the plurality of I power amplifiers, and a Q DAC configured to generate a Q bias current signal for the plurality of Q power amplifiers. Moreover, in these embodiments, the communications device may further comprise an I LUT module upstream of the I DAC and configured to supply a linear I signal thereto, and a Q LUT module upstream of the Q DAC and configured to supply a linear Q signal thereto.

In other embodiments, the I controller may be configured to cause the plurality of I power amplifiers to modulate an I carrier signal into the plurality of I amplified signals based upon an I digital baseband signal. Moreover, the Q controller may also be configured to cause the plurality of Q power amplifiers to modulate a Q carrier signal into the plurality of Q amplified signals based upon a Q digital baseband signal.

For example, each I and Q antenna may comprise a respective rectangular-shaped strip antenna, and the pluralities of I and Q rectangular-shaped strip antennas may be adjacent to each other.

Another aspect is directed to a method of operating a communications device. The method may include using a plurality of I power amplifiers to respectively generate a plurality of I amplified signals, and using a plurality of Q power amplifiers to respectively generate a plurality of Q amplified signals. The method may also include using an I controller to selectively enable at least one of a plurality of I power amplifiers, and using a Q controller to selectively enable at least one of a plurality of Q power amplifiers.

Another aspect of the present disclosure is directed to a communications device. This communications device may include a plurality of I power amplifiers configured to respectively generate a plurality of I amplified signals, a plurality of Q power amplifiers configured to generate a plurality of Q amplified signals, an I controller coupled to the plurality of I power amplifiers and configured to selectively enable at least one of the plurality of I power amplifiers, and a Q controller coupled to the plurality of Q power amplifiers and configured to selectively enable at least one of the plurality of Q power amplifiers. This communications device may also include a power combiner configured to combine the plurality of I amplified signals and the plurality of Q amplified signals in a combined amplified signal, and an antenna coupled to the power combiner.

In some embodiments, the communications device may further comprise an I DAC configured to generate an I bias current signal for the plurality of I power amplifiers, and a Q DAC configured to generate a Q bias current signal for the plurality of Q power amplifiers. These embodiments of the communications device may further comprise an I LUT module upstream of the I DAC and configured to supply a linear I signal thereto, and a Q LUT module upstream of the Q DAC and configured to supply a linear Q signal thereto.

Other embodiments of the communications device may include the I controller being configured to cause the plurality of I power amplifiers to modulate an I carrier signal into the plurality of I amplified signals based upon an I digital baseband signal. Moreover, the Q controller may configured to cause the plurality of Q power amplifiers to modulate a Q carrier signal into the plurality of Q amplified signals based upon a Q digital baseband signal. The communications device may further comprise a phase locked loop (PLL) configured to generate the I and Q carrier signals. The PLL may be configured to generate the I and Q carrier signals comprising constant envelop I and Q carrier signals.

Another aspect is directed to a method of operating a communications device. The method may also include using a plurality of I power amplifiers to respectively generate a plurality of I amplified signals, using a plurality of Q power amplifiers to generate a plurality of Q amplified signals, and using an I controller to selectively enable at least one of the plurality of I power amplifiers. The method may also include using a Q controller to selectively enable at least one of the plurality of Q power amplifiers, using a power combiner to combine the plurality of I amplified signals and the plurality of Q amplified signals in a combined amplified signal, and using an antenna to transmit the combined amplified signal.

Example communications devices may include portable or personal media players (e.g., music or MP3 players, video players, etc.), remote controls (e.g., television or stereo remotes, etc.), portable gaming devices, portable or mobile telephones, smartphones, tablet computers, etc.

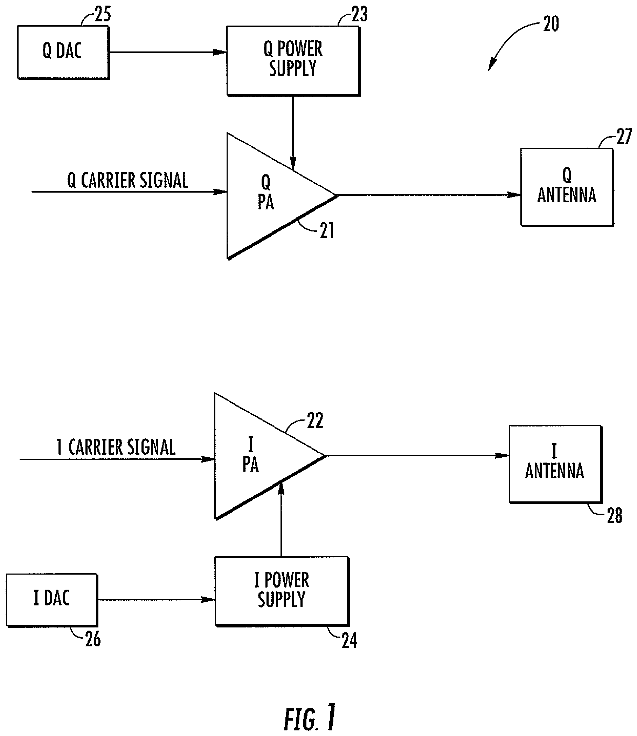

Referring now to FIG. 1, a communications device 20 according to the present disclosure is now described. The communications device 20 illustratively includes an I power amplifier 22 configured to generate an I amplified signal, a Q power amplifier 21 configured to generate a Q amplified signal, an I DAC 26 configured to generate an I signal, and a Q DAC configured to generate a Q signal. The I and Q DACs 25-26 may be operable using third or fourth generation cellular wireless signals, for example, Long Term Evolution (LTE), Mobile WiMAX (IEEE 802.16e-2005), etc. Of course, as will be appreciated by those skilled in the art, other next generation signals may be implemented in the communications device 20 with appropriate modification.

The communications device 20 illustratively includes an I power supply circuit 24 coupled to the I power amplifier 22 and to the I DAC 26 and configured to cause the I power amplifier to modulate an I carrier signal into the I amplified signal based upon the I signal. The communications device 20 illustratively includes a Q power supply circuit 23 coupled to the Q power amplifier 21 and to the Q DAC 25 and configured to cause the Q power amplifier to modulate a Q carrier signal into the Q amplified signal based upon the Q signal. The I and Q power supply circuits 23-24 effect the modulation by varying a power supply voltage used by the I and Q power amplifiers 21-22.

Also, the communications device 20 illustratively includes an I antenna 28 coupled to the I power amplifier 22, and a Q antenna 27 coupled to the Q power amplifier 21. More specifically, the I and Q antennas 28, 27 are illustratively physically separated but adjacent to each other, for example, spaced parallel to each other and at 100 μm apart. The antennas 28, 27 are kept close together such that the radiation pattern around them is as desired when the two operate simultaneously, one radiating I path RF and the second radiating the Q path RF. For example, the I and Q antennas 27-28 are illustratively rectangular-shaped strip antennas that are adjacent to each other. Of course, in other embodiments, the I and Q antennas 27-28 may have other shapes.

In other words, the combination of the amplified I and Q signals occurs over-the-air and not upstream the antenna as in typical communications devices. Advantageously, the combination medium of air is quite favorable since it is a linear medium with high dynamic range. Moreover, since the I and Q carrier signals are constant envelop signals, the I and Q power amplifiers 21-22 may operate in a saturated operation mode, which is energy efficient, rather than the linear mode, as in the typical communications device. Indeed, in the typical communications device, a linear mode amplifier may be required to successfully transmit the wideband third and fourth generation wireless cellular signals. Unfortunately, this leads to undesirably low battery life. In the disclosed communications device 20, the battery life is advantageously lengthened due to power amplifier efficiency.

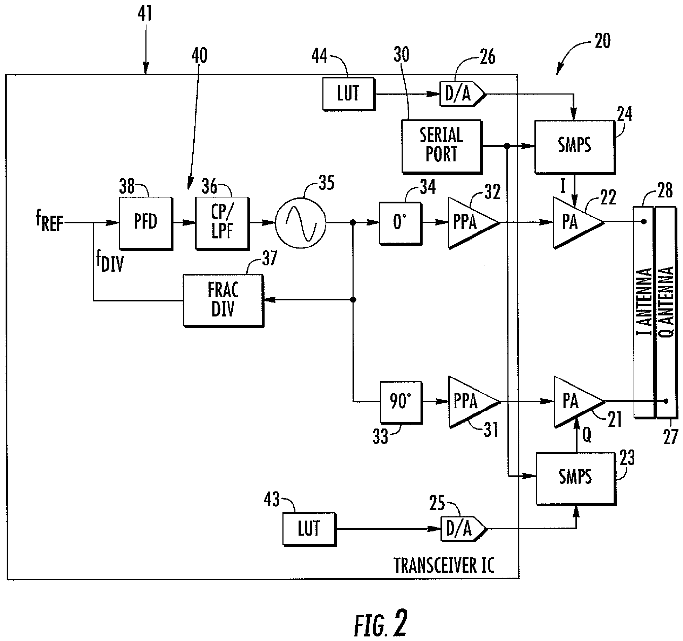

Referring now to FIG. 2, the communications device 20 illustratively includes a transceiver integrated circuit (IC) 41. With the exception of the I and Q power supply circuits 23-24, the I and Q power amplifiers 21-22, and the I and Q antennas **27-28,** the transceiver IC **41** provides the processing resources for all other components of the communications device **20.**

The communications device **20** illustratively includes an I LUT module **44** upstream of the I DAC **26** and configured to supply a linear I signal thereto, and a Q LUT module **43** upstream of the Q DAC **25** configured to supply a linear Q signal. The I and Q LUT modules **43-44** ensure that the applied digital modulation signal is represented linearly at the supply voltage of the I and Q power amplifiers **21-22** as it goes through the I and Q DACs **25-26,** the reference input of the I and Q power supply circuits **23-24** (which are illustratively shown as switched mode power supplies DC-DC (SMPS)), and then to the voltage supplied to the I and Q power amplifiers. As would be appreciated by the skilled person, the output power versus reference input voltage of the illustrated SMPS I and Q power amplifiers **21-22** is not linear. Hence, the I and Q LUT modules **43-44** provide the necessary translation (look-up & interpolation/ extrapolation) so that the output power is a linear function of the DAC code applied at the input of the LUT respective module.

Moreover, in some embodiments, envelope tracking of the digital baseband I and Q signals may be implemented using the I and Q power supply circuits **23-24.** As will be appreciated by the skilled person, the communications device **20** may include a pair of duplexers (not shown) for providing a full duplex transceiver.

The I and Q LUT modules **43-44** are used to linearize the output power versus the digital baseband I and Q signals. This is accomplished using calibration. In particular, the digital baseband I signal is swept and the output power is measured. The LUT entries are determined such that the transfer characteristics of digital input to output power are linear.

Additionally, the communications device **20** illustratively includes a PLL **40** configured to generate the I and Q carrier signals. The PLL **40** may be configured to generate the I and Q carrier signals comprising constant envelop I and Q carrier signals, for example. More specifically, the PLL **40** illustratively includes a phase frequency detector (PFD) **38,** a low pass filter **36** downstream therefrom, a signal generator **35** (e.g., a voltage controller oscillator (VCO)) downstream therefrom, and a frequency divider **37** coupled between the signal generator and the PFD.

Moreover, in the illustrated embodiment, the communications device **20** illustratively includes an I pre-amplifier **32** coupled upstream the I power amplifier **22,** and a Q pre-amplifier **31** coupled upstream the Q power amplifier **21.** The communications device **20** illustratively includes a 90-degree phase shifter **33** coupled between the PLL **40** and the Q pre-amplifier **31,** and a 0 degrees phase shifter **34** coupled between the PLL **40** and the I pre-amplifier **32.** The communications device **20** also illustratively includes a serial port module **30** coupled to the I power supply circuit **24.** In the illustrated SMPS embodiment, the serial port module **30** is used to control the operating characteristics of the I and Q power supply circuits **23-24** and to exercise programmability offered by the SMPS, such as internal BW control etc. or switching between PWM and PFM modes etc. as deemed appropriate by the software running in the processor in the transceiver or the baseband processor.

Moreover, as will be appreciated by those skilled in the art, the VCO (signal generator **35**) may be operated at 2X or even 4X the carrier frequency, and one or more frequency dividers **37** may be used to divide the frequency to the specified carrier frequency. This is done to help the transceiver IC **41** fight frequency pulling where the high output power at the I and Q power amplifiers **21-22** centered as the carrier frequency couples to the VCO and corrupts the phase noise.

An advantage of such frequency division is that all four phases 0°, 90°, 180° and 270° of the RF carrier are readily available. Since the power can only be positive, the I and Q DACs **25-26** can only provide a positive signal to the I and Q power supply circuits **23-24,** which can only produce a voltage between ground and $V_{BATT}$. Hence, in contrast to a typical up-conversion mixer that may allow positive and negative baseband input voltage, this communications device **20** does not directly allow negative inputs.

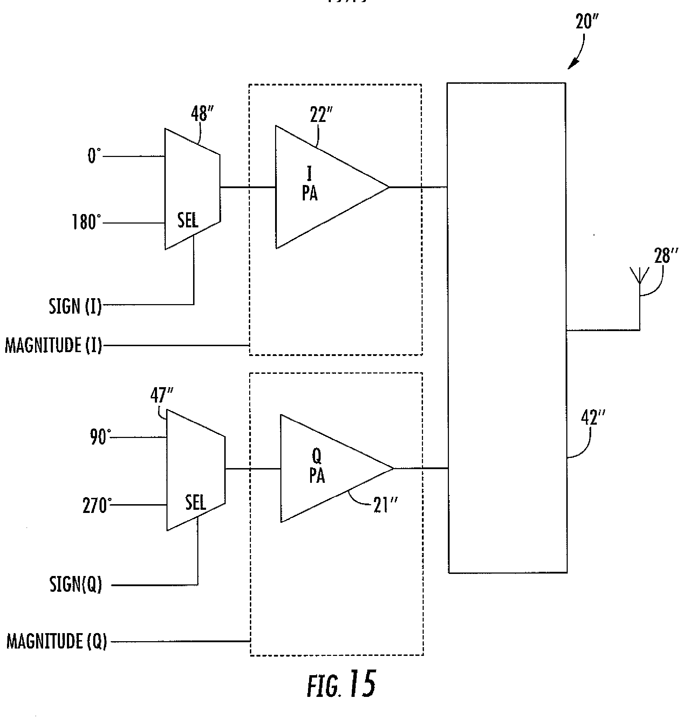

The way to accommodate the negative I DAC **26** input is to choose 180° phase and to apply the inverted carrier to the I power amplifier **22** input. Hence, positive I DAC values apply 0° phase to the I power amplifier **22** input, and negative I DAC values apply 180° phase to the I power amplifier input. Similarly, positive Q DAC values apply 90° phase to the Q power amplifier **21** input, and negative Q DAC values apply 270° phase to the Q power amplifier input. This is done by using the sign bit to control a multiplexer (FIG. 15) that allows one or the other phase of the carrier signal to the I and Q power amplifier **21-22** inputs. Hence, one multiplexer is needed for I path and the second for Q path. The magnitudes of I DAC and Q DAC values are always positive and, therefore, are applied to the respective DACs **25-26.**

In FIG. 2, it is assumed that the 0-degrees phase shifter **34** provides 0° or 180° phase shifting based upon the sign of the I DAC input to I power amplifier **22,** and the 90-degress phase shifter **33** provides 90° or 270° phase shifting based upon the sign of Q DAC input to Q power amplifier **21.** The phase shifter **34** can be implemented using a multiplexer with inputs 0° or 180° and the sign bit of I DAC input choosing 0° phase for positive inputs and 180° phase for negative inputs. Similarly, the phase shifter **33** can be implemented using inputs 90° and 270° from the PLL **40** going into a second multiplexer with 90° selected when Q DAC input is positive and 270° when it is negative. Of course, this variation of the phase shifters may also be applicable to the PLL circuits in other embodiments disclosed herein.

In other embodiments, 2X or 4X rate VCO **35** outputs can be divided to directly obtain the four needed phases. More specifically, instead of generating the 90°/270° and 180° degree phases, the VCO **35** in the PLL **40** may be designed at 2X or 4X or even higher frequency and its output divided to obtain the needed four phases 0°, 90°, 180° and 270° needed in accordance with quadrature up-conversion. Phase 0° or 180° PLL outputs are applied to the I power amplifier **22,** and the sign of I signal determines the selection between 0° and 180°.

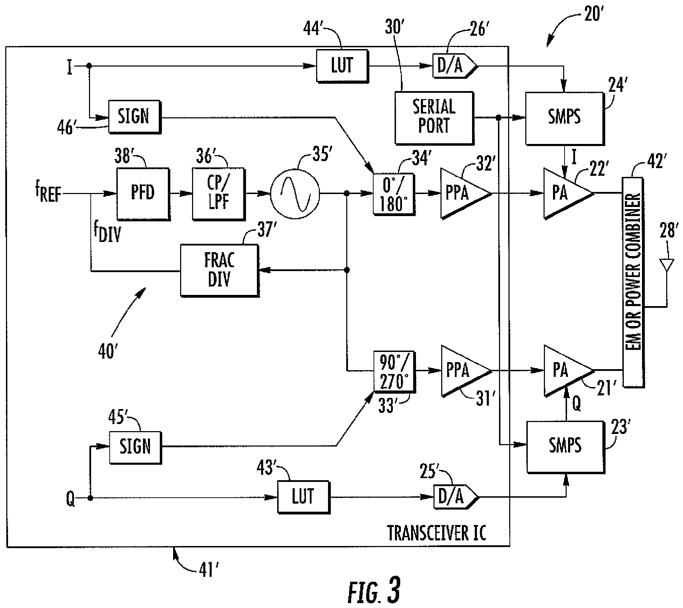

Referring now to FIG. 3, another embodiment of the communications device **20** is now described. In this embodiment of the communications device **20',** those elements already discussed above with respect to FIGS. 1-2 are given prime notation and most require no further discussion herein. This embodiment differs from the previous embodiment in that the communications device **20'** exchanges the separate I and Q antennas for a single antenna **28',** and further includes a power combiner **42'** coupled between the antenna and the I and Q power amplifiers **21'-22'.** Moreover, this communications device **20'** illustratively includes I and Q controllers **45'-46'** coupled upstream of respective I and Q LUT modules **43'-44'** for selecting the desired phase shift for the respective phase shifters **33'-34'.**

Referring briefly and additionally to FIG. 15, another embodiment of the communications device **20** is now described. In this embodiment of the communications device **20",** those elements already discussed above with respect to FIG. 3 are given double prime notation and most require no further discussion herein. This embodiment differs from the previous embodiment in that the communications device **20"** includes a pair of multiplexers **47"-48"** coupled upstream of the I and Q power amplifiers **21"-22"** for selectively providing the phase shifted and I and Q signals, as discussed hereinabove.

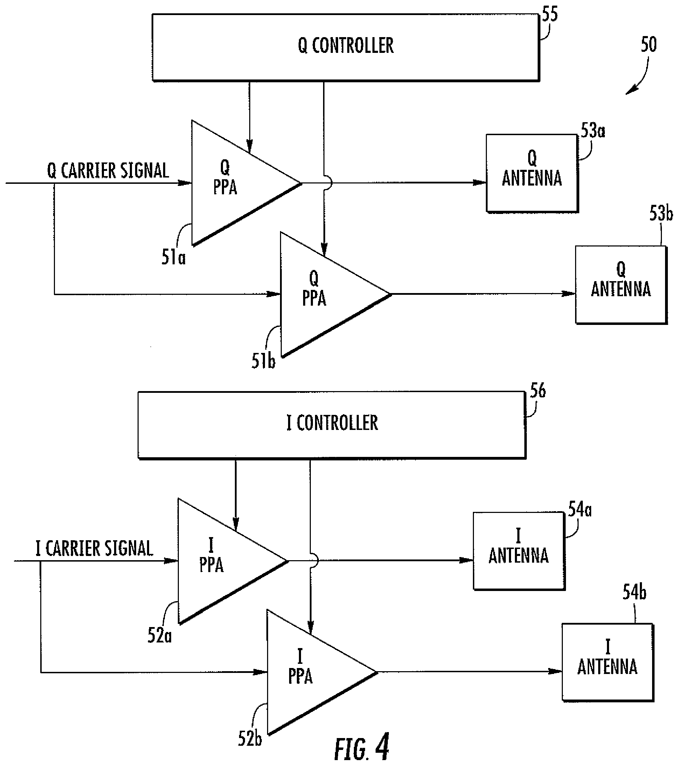

Referring now to FIG. 4, another embodiment of a communications device **50** is now described. This communications device **50** illustratively includes a plurality of I power amplifiers **52a-52b** configured to respectively generate a plurality of I amplified signals, a plurality of Q power amplifiers **51a-51b** configured to respectively generate a plurality of Q amplified signals, a plurality of I antennas **54a-54b** respectively coupled to the plurality of I power amplifiers, and a plurality of Q antennas **53a-53b** respectively coupled to the plurality of Q power amplifiers.

The communications device **50** illustratively includes an I controller **56** coupled to the plurality of I power amplifiers **52a-52b** and configured to selectively enable at least one of the plurality of I power amplifiers, and a Q controller **55** coupled to the plurality of Q power amplifiers **51a-51b** and configured to selectively enable at least one of the plurality of Q power amplifiers. In particular, the I and Q controllers **55-56** enable as many power amplifiers **51a-52b** as needed to successfully transmit the signal. For example, fewer power amplifiers **51a-52b** would be enabled when the communications device is near a network tower. Because of this selective enabling of the power amplifiers **51a-52b,** power-added efficiency (PAE) versus power output is advantageously high. Those skilled in art will appreciate that the communications device **50** acts as an effective DAC that produces an electromagnetic output power directly controlled by the I and Q controllers **55-56.** This effective DAC can also be called a digital-to-electromagnetic converter (DEC).

Of course, as will be appreciated by the skilled person, the illustrated embodiment includes two I and two Q power amplifiers **51a-51b,** but other embodiments may include varying numbers, which may depend on the desired application. For example, the communications device **50** may include 50 I power amplifiers and 50 Q power amplifiers, each generating 20mW of power for a total maximum potential power output of 2W. Advantageously, since the power output of each power amplifier **41a-52b** is reduced, the power amplifiers may be provided by a single transceiver chip along with the other signal processing elements, rather than being off-chip.

In another example, a 10-bit DEC can be designed by placing 1024 pre-power amplifiers and associated antenna segments. The digital control signal now directly selects the output power produced. As described above, the sign bit of the digital signal can be used to flip the carrier signal at the pre-power amplifiers inputs by 180°. The pre-power amplifier segments can be constructed using similar techniques used to build typical current source based DACs and using binary-to-thermometer encoding to select the pre-power amplifiers. Those skilled in the art can appreciate a wide range of typical DACs that can directly be applied in this embodiment to DECs.

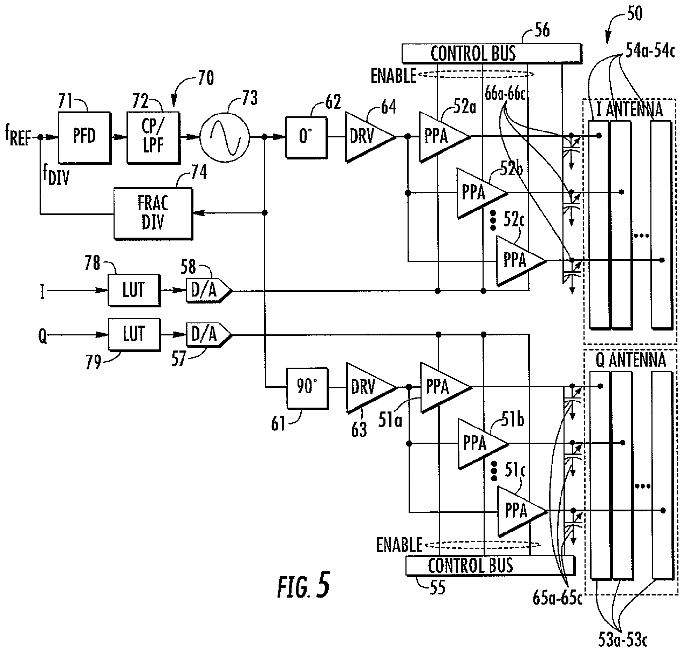

Referring now to FIG. 5, the communications device **50** illustratively includes an I DAC **58** configured to generate an I bias current signal for the plurality of I power amplifiers **52a-52c,** and a Q DAC **57** configured to generate a Q bias current signal for the plurality of Q power amplifiers **51a-51c.** In other words, the bias currents to the power amplifiers **51a-52c** are manipulated to effect the modulation of the I and Q carrier signals.

Moreover, in the illustrated embodiment, the communications device **50** includes an I LUT module **78** upstream of the I DAC **58** and configured to supply a linear I signal thereto, and a Q LUT module **79** upstream of the Q DAC **57** and configured to supply a linear Q signal thereto. The I and Q LUT modules **78-79** are configured similarly to those of the embodiments of FIGS. 2-3.

Additionally, the communications device **50** illustratively includes a PLL **70** configured to generate the I and Q carrier signals. The PLL **70** may be configured to generate the I and Q carrier signals comprising constant envelop I and Q carrier signals, for example. More specifically, the PLL **70** illustratively includes a phase frequency detector (PFD) **71,** a low pass filter **72** downstream therefrom, a signal generator **73** downstream therefrom, and a frequency divider **74** coupled between the signal generator and the PFD.

Moreover, in the illustrated embodiment, the communications device **50** illustratively includes an I driver **64** coupled upstream the I power amplifiers **52a-52c,** and a Q driver **63** coupled upstream the Q power amplifiers **51a-51a.** The communications device **50** illustratively includes a 90-degree phase shifter **61** coupled between the PLL **70** and the Q driver **63,** and a 0 degrees phase shifter **62** coupled between the PLL **70** and the I driver **64.** As described above, the phase shifters **61-62** can be implemented by designing the VCO **73** at 2X or 4X RF carrier frequency and dividing the frequency down to obtain the carrier frequency. Using sign bit of DAC input and 2:1 multiplexer, these phase shifters **61-62** can be easily implemented as described earlier. Also, the communications device illustratively includes I and Q matching networks **66a-66c, 65a-65c** respectively coupled between the I and Q antennas **54a-54c, 53a-53c** and the I and Q power amplifiers **52a-52c, 51a-51c.** The I and Q matching networks **66a-66c, 65a-65c** may be programmable and controlled digitally for antenna tuning, i.e. varying voltage standing wave ratio (VSWR) at the antenna load.

Indeed, in some embodiments (not shown), the output of the power amplifiers **51a-52b** can be parasitically coupled, down-converted and analog-to-digital (ADC) converted in the small signal IC. Alternatively, a trace close to the antennas **53a-54c** can pick up the signal and feed it back into the small signal IC where it is down-converted either using a receiver or a log-Amp followed by an ADC. The tuning elements for matching can be controlled to provide desirable tuning for output power under varying VSWR at the antenna **53a-54c.**

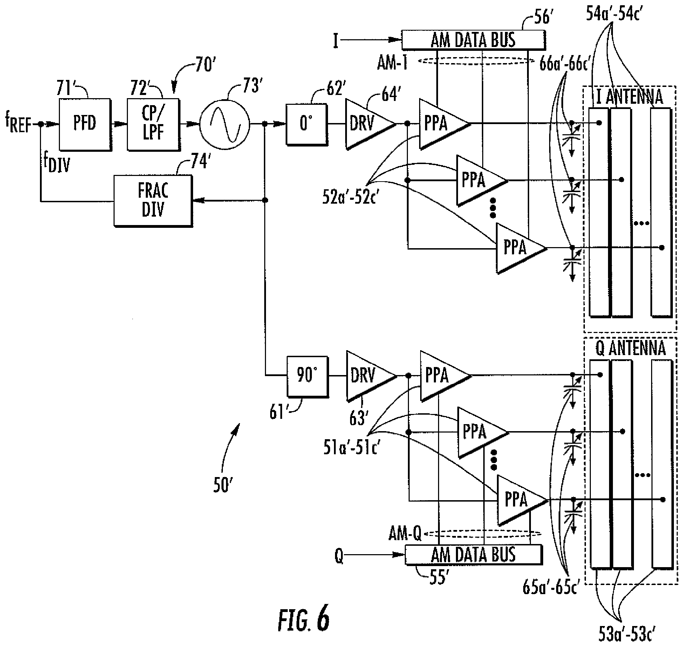

Referring now to FIG. 6, another embodiment of the communications device **50** is now described. In this embodiment of the communications device **50',** those elements already discussed above with respect to FIGS. 4-5 are given prime notation and most require no further discussion herein. This embodiment differs from the previous embodiment in that the communications device **50'** does not include the I and Q DACs and LUT modules. Rather, in this embodiment, the I and Q power amplifiers **51a'-52a'** are manipulated to modulate the I and Q carrier signals via the I and Q controllers **55'-56'.** In other words, the I controller **56'** is configured to cause the plurality of I power amplifiers **52a'-52c'** to modulate an I carrier signal into the plurality of I amplified signals based upon an I digital baseband signal, and the Q controller **55'** is configured to cause the plurality of Q power amplifiers **51a'-51c'** to modulate a Q carrier signal into the plurality of Q amplified signals based upon a Q digital baseband signal. In particular, the communications device **50'** forms an effective DAC, and the sign of the DAC input controls the appropriate phase carrier to be selected, similar to as described for earlier embodiments. The digital value is converted to magnitude and controls the number of devices that are turned on. In this embodiment of a DEC, the antenna segment is a part of the effective DAC.

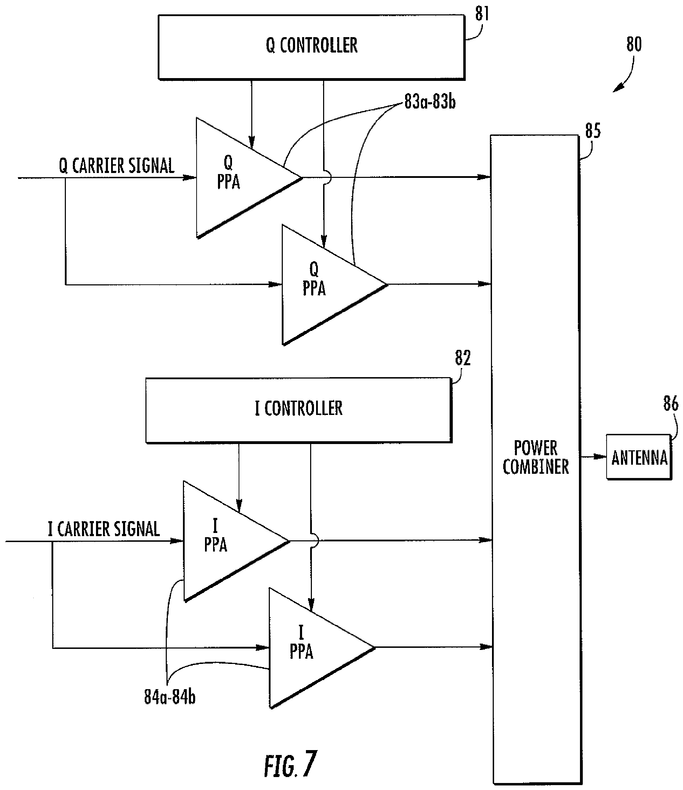

Referring now to FIG. 7, another embodiment of a communications device **80** is now described. This communications device **80** illustratively includes a plurality of I power amplifiers **84a-84b** configured to respectively generate a plurality of I amplified signals, a plurality of Q power amplifiers **83a-83b** configured to generate a plurality of Q amplified signals, an I controller **82** coupled to the plurality of I power amplifiers and configured to selectively enable at least one of the plurality of I power amplifiers, and a Q controller **81** coupled to the plurality of Q power amplifiers and configured to selectively enable at least one of the plurality of Q power amplifiers. This communications device **80** illustratively includes a power combiner **85** configured to combine the plurality of I amplified signals and the plurality of Q amplified signals in a combined amplified signal, and an antenna **86** coupled to the power combiner.

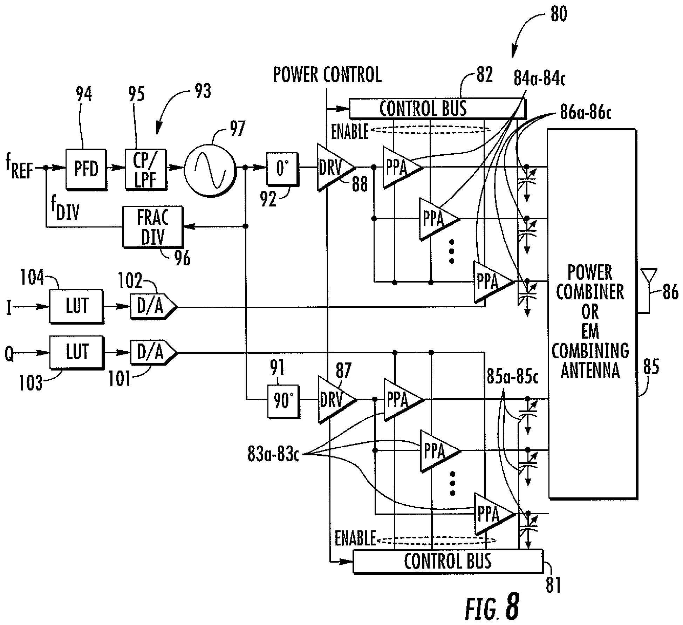

Referring now to FIG. 8, the communications device **80** illustratively includes an I DAC **102** configured to generate an I bias current signal for the plurality of I power amplifiers **84a-84c,** and a Q DAC **101** configured to generate a Q bias current signal for the plurality of Q power amplifiers **83a-83c.** In other words, the bias currents to the power amplifiers **83a-84c** are manipulated to effect the modulation of the I and Q carrier signals.

Moreover, in the illustrated embodiment, the communications device **80** includes an I LUT module **104** upstream of the I DAC **102** and configured to supply a linear I signal thereto, and a Q LUT module **103** upstream of the Q DAC **101** and configured to supply a linear Q signal thereto. The I and Q LUT modules **103-104** are configured similarly to those of the embodiments of FIGS. 2-3.

Additionally, the communications device **80** illustratively includes a PLL **93** configured to generate the I and Q carrier signals. The PLL **93** may be configured to generate the I and Q carrier signals comprising constant envelop I and Q carrier signals, for example. More specifically, the PLL **93** illustratively includes a phase frequency detector (PFD) **94,** a low pass filter **95** downstream therefrom, a signal generator **97** downstream therefrom, and a frequency divider **96** coupled between the signal generator and the PFD.

Moreover, in the illustrated embodiment, the communications device **80** illustratively includes an I driver **88** coupled upstream the I power amplifiers **84a-84c,** and a Q driver **87** coupled upstream the Q power amplifiers **83a-83c.** The communications device **80** illustratively includes a 90-degree phase shifter **91** coupled between the PLL **93** and the Q driver **87,** and a 0 degrees phase shifter **92** coupled between the PLL **93** and the I driver **88.** Also, the communications device **80** illustratively includes I and Q capacitors **86a-86c, 85a-85c** respectively coupled between the power combiner **85** and the I and Q power amplifiers **84a-84c, 83a-83c,** each of the capacitors being coupled to a ground potential. As described above, the phase shifters **91-92** can be implemented by designing the VCO **97** at 2X or 4X RF carrier frequency and dividing the frequency down to obtain the carrier frequency. Using sign bit of DAC input and 2:1 multiplexer, these phase shifters **91-92** can be easily implemented as described earlier.

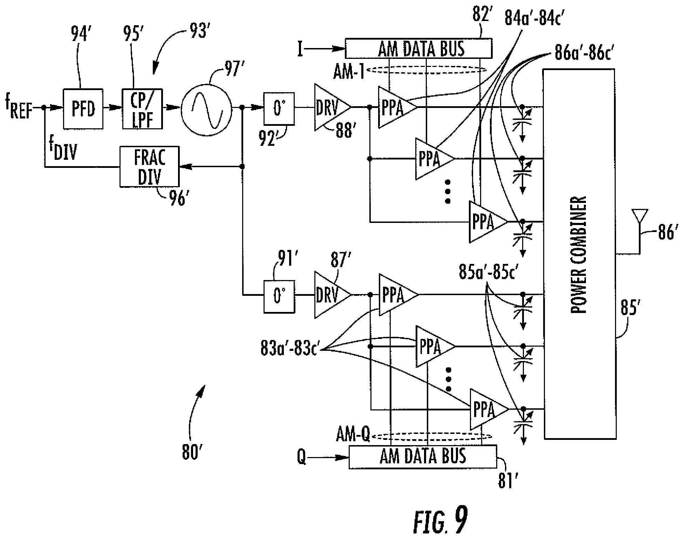

Referring now to FIG. 9, another embodiment of the communications device **80** is now described. In this embodiment of the communications device **80',** those elements already discussed above with respect to FIGS. 7-8 are given prime notation and most require no further discussion herein. This embodiment differs from the previous embodiment in that the communications device **80'** does not include the I and Q DACs and LUT modules. Rather, in this embodiment, the I and Q power amplifiers **83a'-84c'** are manipulated to modulate the I and Q carrier signals via the I and Q controllers **81'-82'**. In other words, the I controller **82'** is configured to cause the plurality of I power amplifiers **84a'-84c'** to modulate an I carrier signal into the plurality of I amplified signals based upon an I digital baseband signal, and the Q controller **81'** is configured to cause the plurality of Q power amplifiers **83a'-83c'** to modulate a Q carrier signal into the plurality of Q amplified signals based upon a Q digital baseband signal.

The I and Q controllers **81'-82'** operate similarly to those of the embodiment described above in FIG. 6. This embodiment here differs from the DEC described above in that each DAC element now only drives a segment of the power combiner **85'** and produces an RF output. Hence, it is more appropriately an effective digital-to-RF (D-RF) converter.

Typical methods can be used to build the power combiner **85'**, which can be implemented as a transformer with many primaries and a single secondary that drives the antenna **86'**. It is beneficial to combine the output power passively to keep the output power combination very linear. Passive N:1 combiner structures can be employed; one D-RF converter element drives one combiner element at its input. The D-RF converter can be implemented using typical techniques used to build DACs, such as arraying carefully to reduce the impact of INL and DNL, binary to thermometer coding, shuffling the row-column decoders of binary-to-thermometer encoder using barrel shifters to implement dynamic element matching, employing dynamic weighted averaging etc.

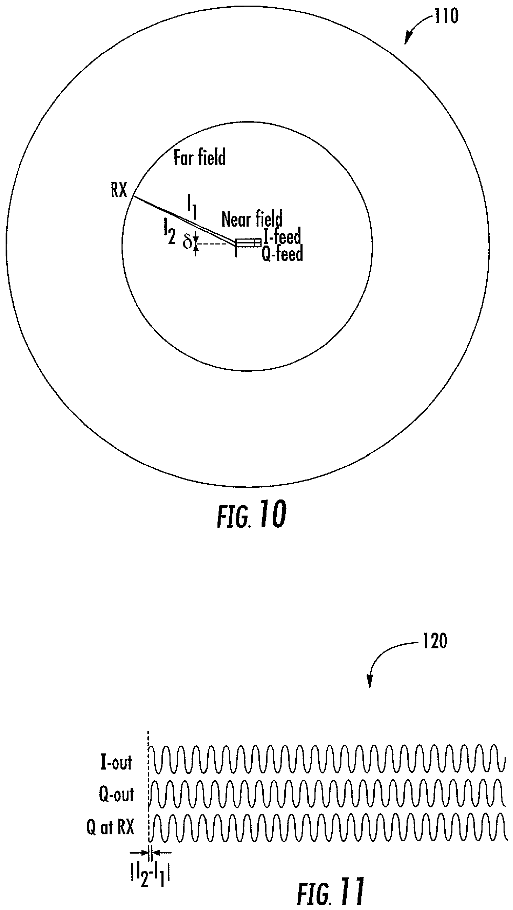

Referring now to FIGS. 10-13, a simulation of the efficacy of the transmission characteristics of the communications device **20** described in FIGS. 1-2 is now described. Diagram **110** shows the combination of the amplified I and Q signals over the air while chart **120** illustrates the I and Q waveforms emitted by the I and Q antennas **27-28**. The chart **120** shows that one wave travels slightly more than the other with the distance shown as $|l_2-l_1|$.

With reference to diagram **130**, the formula:

$$| l_2 - l_1 | = \left| \sqrt{(r\cos(\phi) + d/2)^2 + r^2 \sin^2(\phi)} - \sqrt{(r\cos(\phi) - d/2)^2 + r^2 \sin^2(\phi)} \right|$$

is illustrated. If r=kd, the formula resolves to:

$$= \left| \sqrt{r^2 + d^2/4 + rd\cos(\phi)} - \sqrt{r^2 + d^2/4 - rd\cos(\phi)} \right|$$

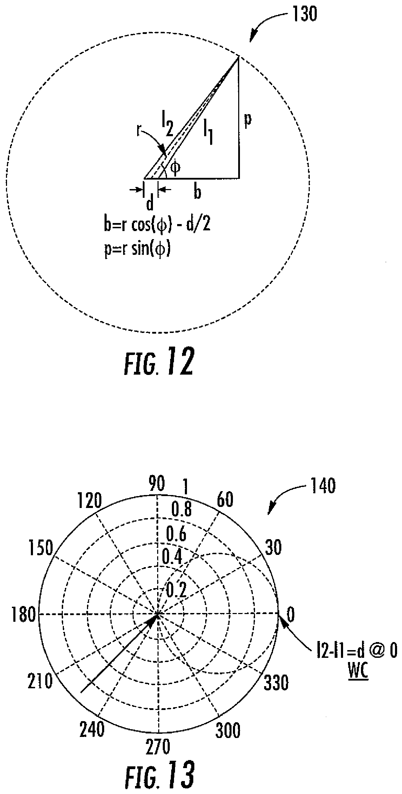

The plot of $|l_2-l_1|$ is shown in diagram **140** of FIG. 13. At 2 GHz and 150mm away from the antenna, the experienced IQ imbalance is 2.4*d degrees, where d is measured in mm. The IQ imbalance due to separate antennas can be made less than the IQ imbalance floor of the transmitter by keeping the two antennas very close, thereby enabling successful receipt of the over-the-air combined I and Q signal.

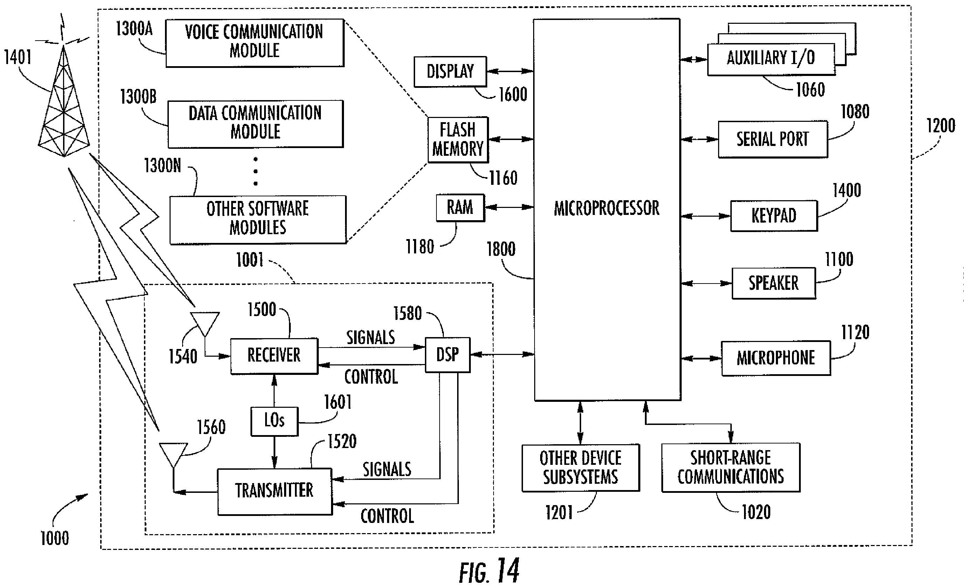

Example components of a mobile wireless communications device **1000** that may be used in accordance with the above-described embodiments are further described below with reference to FIG. 14. The device 1000 illustratively includes a housing **1200**, a keyboard or keypad **1400** and an output device **1600**. The output device shown is a display **1600**, which may comprise a full graphic liquid crystal display (LCD). Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 14. These include a communications subsystem **1001**; a short-range communications subsystem **1020**; the keypad **1400** and the display **1600**, along with other input/output devices **1060, 1080, 1100** and **1120**; as well as memory devices **1160, 1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020**. The communications subsystem **1001** includes a receiver **1500**, a transmitter **1520,** and one or more antennas **1540** and **1560**. In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000**. The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary I/O device **1060**. A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000**. In addition, the display 1600 may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Other features relating to communications devices are disclosed in co-pending application(s) "QUADRATURE COMMUNICATIONS DEVICE WITH I ANTENNAS AND Q ANTENNAS AND MODULATED POWER SUPPLY AND RELATED METHODS," Attorney Docket No. 85193; and "QUADRATURE COMMUNICATIONS DEVICE WITH I ANTENNAS AND Q ANTENNAS AND RELATED METHODS".

Many modifications and other embodiments will come to the mind of one skilled in the art having the benefit of the teachings presented in the foregoing descriptions and the associated drawings.

**Claims**

1. A communications device (80) comprising:

   a plurality of In-phase, I, power amplifiers (84a-84b) configured to generate a plurality of I amplified signals;
   a plurality of Quadrature, Q, power amplifiers (83a-83b) configured to generate a plurality of Q amplified signals;
   an I controller (82) coupled to said plurality of I power amplifiers and configured to selectively enable at least one of said plurality of I power amplifiers based upon at least a selected output power, and configured to control the plurality of I power amplifiers to modulate and mix an I carrier signal directly with an I digital baseband signal to generate the plurality of I amplified signals;
   a Q controller (81) coupled to said plurality of Q power amplifiers and configured to selectively enable at least one of said plurality of Q power amplifiers based upon at least the selected output power, and configured to control the plurality of Q power amplifiers to modulate and mix a Q carrier signal directly with a Q digital baseband signal to generate the plurality of Q amplified signals;
   a power combiner (85) configured to combine the plurality of I amplified signals and the plurality of Q amplified signals in a combined amplified signal; and
   an antenna (86) coupled to said power combiner.

2. The communications device of claim 1 further comprising an I digital-to-analog converter, DAC, (102) configured to generate an I bias current signal for said plurality of I power amplifiers, and a Q DAC (101) configured to generate a Q bias current signal for said plurality of Q power amplifiers.

3. The communications device of claim 2 further comprising an I look-up table, LUT, module (104) upstream of said I DAC and configured to supply a linear I signal thereto, and a Q LUT module (103) upstream of said Q DAC and configured to supply a linear Q signal thereto.

4. The communications device of claim 1 further comprising a phase locked loop, PLL, (93) configured to generate the I and Q carrier signals.

5. The communications device of claim 4 wherein said PLL is configured to generate the I and Q carrier signals comprising constant envelop I and Q carrier signals.

6. The communications device of claim 5 further comprising a 90/270-degree phase shifter (91) between said PLL and said plurality of Q power amplifiers.

7. A method of operating a communications device (80) comprising:

   using a plurality of In-phase, I, power amplifiers (84a-84b) to generate a plurality of I amplified signals;
   using a plurality of Quadrature, Q, power amplifiers (83a-83b) to generate a plurality of Q amplified signals;
   using an I controller (82) to selectively enable at least one of the plurality of I power amplifiers based upon at least a selected output power, and to control the plurality of I power amplifiers to modulate and mix an I carrier signal directly with an I digital baseband signal to generate the plurality of I amplified signals;
   using a Q controller (81) to selectively enable at least one of the plurality of Q power amplifiers based upon at least the selected output power, and to control the plurality of Q power amplifiers to modulate and mix a Q carrier signal directly with a Q digital baseband signal to generate the plurality of Q amplified signals;
   using a power combiner (85) to combine the plurality of I amplified signals and the plurality of Q amplified signals in a combined amplified signal; and
   using an antenna (86) to transmit the combined amplified signal.

8. The method of claim 7 further comprising using an I digital-to-analog converter, DAC, (102) to generate an I bias current signal for the plurality of I power amplifiers, and using a Q DAC (101) to generate a Q bias current signal for the plurality of Q power amplifiers.

9. The method of claim 8 further comprising using an I look-up table, LUT, (104) module upstream of the I DAC to supply a linear I signal thereto, and a Q LUT module (103) upstream of the Q DAC to supply a linear Q signal thereto.

**Patentansprüche**

1. Kommunikationsvorrichtung (80) umfassend
eine Vielzahl von In-Phase-(I-)Leistungsverstärkern (84a-84b), die dafür konfiguriert sind, eine Vielzahl von I-verstärkten Signalen zu erzeugen;
eine Vielzahl von Quadratur-(Q-)Leistungsverstärkern (83a-83b), die dafür konfiguriert sind, eine Vielzahl von Q-verstärkten Signalen zu erzeugen;
einen I-Controller (82), der mit der Vielzahl von I-Leistungsverstärkern gekoppelt und dafür konfiguriert ist, zumindest einen der Vielzahl von I-Leistungsverstärkern auf der Grundlage zumindest einer ausgewählten Ausgangsleistung selektiv zu aktivieren, und dafür konfiguriert ist, die Vielzahl von I-Leistungsverstärkern dahingehend zu steuern, dass ein I-Trägersignal moduliert und direkt mit einem digitalen I-Basisbandsignal gemischt wird, um die Vielzahl von I-verstärkten Signalen zu erzeugen;
einen Q-Controller (81), der mit der Vielzahl von Q-Leistungsverstärkern gekoppelt und dafür konfiguriert ist, zumindest einen der Vielzahl von Q-Leistungsverstärkern auf der Grundlage zumindest der ausgewählten Ausgangsleistung selektiv zu aktivieren, und dafür konfiguriert ist, die Vielzahl von Q-Leistungsverstärkern dahingehend zu steuern, dass ein Q-Trägersignal moduliert und direkt mit einem digitalen Q-Basisbandsignal gemischt wird, um die Vielzahl von Q-verstärkten Signalen zu erzeugen;
einen Leistungskombinierer (85), der dafür konfiguriert ist, die Vielzahl von I-verstärkten Signalen und die Vielzahl von Q-verstärkten Signalen in einem kombinierten verstärkten Signal zu kombinieren; und
eine Antenne (86), die mit dem Leistungskombinierer gekoppelt ist.

2. Kommunikationsvorrichtung nach Anspruch 1, die ferner einen I-Digital-Analog-Umsetzer, DAU, (102) umfasst, der dafür konfiguriert ist, ein I-Vorstrom-Signal für die Vielzahl von I-Leistungsverstärkern zu erzeugen, und einen Q-DAU (101) umfasst, der dafür konfiguriert ist, ein Q-Vorstrom-Signal für die Vielzahl von Q-Leistungsverstärkern zu erzeugen.

3. Kommunikationsvorrichtung nach Anspruch 2, die ferner stromaufwärts von dem I-DAU ein I-Verweistabellenmodul (104) umfasst, das dafür konfiguriert ist, ersterem ein lineares I-Signal zuzuführen, und stromaufwärts von dem Q-DAU ein Q-Verweistabellenmodul (103) umfasst, das dafür konfiguriert ist, ersterem ein lineares Q-Signal zuzuführen.

4. Kommunikationsvorrichtung nach Anspruch 1, die ferner einen Phasenregelkreis (93) umfasst, der dafür konfiguriert ist, die I- und Q-Trägersignale zu erzeugen.

5. Kommunikationsvorrichtung nach Anspruch 4, wobei der Phasenregelkreis dafür konfiguriert ist, die I- und Q-Trägersignale zu erzeugen, die I- und Q-Trägersignale mit konstanter Hüllkurve umfassen.

6. Kommunikationsvorrichtung nach Anspruch 5, die ferner einen 90/270-Grad-Phasenschieber (91) zwischen dem Phasenregelkreis und der Vielzahl von Q-Leistungsverstärkern umfasst.

7. Verfahren zum Betreiben einer Kommunikationsvorrichtung (80), umfassend:

das Verwenden einer Vielzahl von In-Phase- (I) Leistungsverstärkern (84a-84b) zum Erzeugen einer Vielzahl von I-verstärkten Signalen;
das Verwenden einer Vielzahl von Quadratur- (Q) Leistungsverstärkern (83a-83b) zum Erzeugen einer Vielzahl von Q-verstärkten Signalen;
das Verwenden eines I-Controllers (82) zum selektiven Aktivieren zumindest eines der Vielzahl von I-Leistungsverstärkern auf der Grundlage zumindest einer ausgewählten Ausgangsleistung und zum Steuern der Vielzahl von I-Leistungsverstärkern dahingehend, dass ein I-Trägersignal moduliert und direkt mit einem digitalen I-Basisbandsignal gemischt wird, um die Vielzahl von I-verstärkten Signalen zu erzeugen;
das Verwenden eines Q-Controllers (81) zum selektiven Aktivieren zumindest eines der Vielzahl von Q-Leistungsverstärkern auf der Grundlage zumindest der ausgewählten Ausgangsleistung und zum Steuern der Vielzahl von Q-Leistungsverstärkern dahingehend, dass ein Q-Trägersignal moduliert und direkt mit einem digitalen Q-Basisbandsignal gemischt wird, um die Vielzahl von Q-verstärkten Signalen zu erzeugen;
das Verwenden eines Leistungskombinierers (85) zum Kombinieren der Vielzahl von I-verstärkten Signalen und der Vielzahl von Q-verstärkten Signalen in einem kombinierten verstärkten Signal; und
das Verwenden einer Antenne (86) zum Senden des kombinierten verstärkten Signals.

**8.** Verfahren nach Anspruch 7 ferner umfassend:

das Verwenden eines 1-Digital-Analog-Umsetzers, DAU, (102) zum Erzeugen eines I-Vorstrom-Signals für die Vielzahl von I-Leistungsverstärkern, und
das Verwenden eines Q-DAU (101) zum Erzeugen eines Q-Vorstrom-Signals für die Vielzahl von Q-Leistungsverstärkern.

**9.** Verfahren nach Anspruch 8 ferner umfassend:

das Verwenden eines stromaufwärts von dem I-DAU angeordneten I-Verweistabellenmoduls (104) zum Zuführen eines linearen I-Signals zu ersterem, und eines stromaufwärts von dem Q-DAU angeordneten Q-Verweistabellenmoduls (103) zum Zuführen eines linearen Q-Signals zu ersterem.

**Revendications**

**1.** Dispositif de communication (80) comprenant :

une pluralité d'amplificateurs de puissance en phase, I, (84a et 84b) configurés pour produire une pluralité de signaux amplifiés I ;
une pluralité d'amplificateurs de puissance en quadrature, Q, (83a et 83b) configurés pour produire une pluralité de signaux amplifiés Q ;
un contrôleur I (82) couplé à ladite pluralité d'amplificateurs de puissance I et configuré pour valider sélectivement au moins un amplificateur dans ladite pluralité d'amplificateurs de puissance I, en fonction au moins d'une puissance de sortie sélectionnée, et configuré pour commander la pluralité d'amplificateurs de puissance I afin de moduler et mélanger un signal de porteuse I directement avec un signal en bande de base numérique I en vue de produire la pluralité de signaux amplifiés I ;
un contrôleur Q (81) couplé à ladite pluralité d'amplificateurs de puissance Q et configuré pour valider sélectivement au moins un amplificateur dans ladite pluralité d'amplificateurs de puissance Q, en fonction au moins de la puissance de sortie sélectionnée, et configuré pour commander la pluralité d'amplificateurs de puissance Q afin de moduler et mélanger un signal de porteuse Q directement avec un signal en bande de base numérique Q en vue de produire la pluralité de signaux amplifiés Q ;
un combinateur de puissance (85) configuré pour combiner la pluralité de signaux amplifiés I et la pluralité de signaux amplifiés Q afin de donner un signal amplifié combiné ; et
une antenne (86) couplée audit combinateur de puissance.

**2.** Dispositif de communication selon la revendication 1, comprenant en outre un convertisseur numérique-analogique, CNA, I (102) configuré pour produire un signal de courant de polarisation I pour ladite pluralité d'amplificateurs de puissance I et un CNA Q (101) configuré pour produire un signal de courant de polarisation Q pour ladite pluralité d'amplificateurs de puissance Q.

**3.** Dispositif de communication selon la revendication 2, comprenant en outre un module de table de consultation I (104) en amont dudit CNA I et configuré pour lui fournir un signal linéaire I et un module de table de consultation Q (103) en amont dudit CNA Q et configuré pour lui fournir un signal linéaire Q.

**4.** Dispositif de communication selon la revendication 1, comprenant en outre une boucle verrouillée en phase (93) configurée pour produire les signaux de porteuse I et Q.

**5.** Dispositif de communication selon la revendication 4, dans lequel ladite boucle verrouillée en phase est configurée pour produire les signaux de porteuse I et Q sous la forme de signaux de porteuse I et Q à enveloppe constante.

**6.** Dispositif de communication selon la revendication 5, comprenant en outre un déphaseur de 90/270 degrés (91) entre ladite boucle verrouillée en phase et ladite pluralité d'amplificateurs de puissance Q.

**7.** Procédé de fonctionnement d'un dispositif de communication (80) comprenant les étapes consistant à :

utiliser une pluralité d'amplificateurs de puissance en phase, I, (84a et 84b) pour produire une pluralité de signaux amplifiés I ;
utiliser une pluralité d'amplificateurs de puissance en quadrature, Q, (83a et 83b) pour produire une pluralité de signaux amplifiés Q ;
utiliser un contrôleur I (82) pour valider sélectivement au moins un amplificateur dans ladite pluralité d'amplificateurs de puissance I, en fonction au moins d'une puissance de sortie sélectionnée, et pour commander la pluralité d'amplificateurs de puissance I afin de moduler et mélanger un signal de porteuse I directement avec un signal en bande de base numérique I en vue de produire la pluralité de signaux amplifiés I ;
utiliser un contrôleur Q (81) pour valider sélectivement au moins un amplificateur dans ladite pluralité d'amplificateurs de puissance Q, en fonction au moins de la puissance de sortie sélectionnée, et pour commander la pluralité d'amplificateurs de puissance Q afin de moduler et mélanger un signal de porteuse Q directement avec un signal en bande de base numérique Q en vue de produire la pluralité de signaux amplifiés Q ;
utiliser un combinateur de puissance (85) pour combiner la pluralité de signaux amplifiés I et la pluralité de signaux amplifiés Q afin de donner un signal amplifié combiné ; et
utiliser une antenne (86) pour émettre le signal amplifié combiné.

**8.** Procédé selon la revendication 7, comprenant en outre les étapes consistant à un convertisseur numérique-analogique, CNA, I (102) pour produire un signal de courant de polarisation I pour ladite pluralité d'amplificateurs de puissance I et utiliser un CNA Q (101) configuré pour produire un signal de courant de polarisation Q pour ladite pluralité d'amplificateurs de puissance Q.

**9.** Procédé selon la revendication 8, comprenant en outre les étapes consistant à utiliser un module de table de consultation I (104) en amont dudit CNA I pour lui fournir un signal linéaire I et à utiliser un module de table de consultation Q (103) en amont dudit CNA Q pour lui fournir un signal linéaire Q.

FIG. 2

FIG. 3

EP 2 501 095 B1

FIG. 4

17

FIG. 5

FIG. 6

FIG. 7

FIG. 8

FIG. 9

FIG. 10

FIG. 11

$$b = r\cos(\phi) - d/2$$
$$p = r\sin(\phi)$$

FIG. *12*

|2-l1=d @ 0
WC

FIG. *13*

FIG. 14

EP 2 501 095 B1

FIG. 15

**EP 2 501 095 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005226340 A1